# FASCICULE DE BREVET EUROPEEN

(11) **EP 4 496 971 B1**
(45) Date de publication et mention de la délivrance du brevet: **24.12.2025**
(21) Numéro de dépôt: 23709171.5
(22) Date de dépôt: 01.03.2023
(51) Int. Cl.: F28F 3/12, H01M 10/6555, H01M 10/6567

(54) **DISPOSITIF DE RÉGULATION THERMIQUE D'UN ORGANE DE STOCKAGE D'ÉNERGIE ÉLECTRIQUE**
WÄRMEREGELUNGSVORRICHTUNG FÜR EIN STROMSPEICHERELEMENT
THERMAL REGULATION DEVICE FOR AN ELECTRICAL ENERGY STORAGE MEMBER

(30) Priorité: 23.03.2022 FR 2202567
(43) Date de publication de la demande: 29.01.2025
(73) Titulaire: VALEO SYSTEMES THERMIQUES, 78320 Le Mesnil-Saint-Denis (FR)
(72) Inventeur: GARDERE, Guillaume, 78322 Le Mesnil-Saint-Denis Cedex (FR); DA COSTA PITO, Sergio, 78322 Le Mesnil-Saint-Denis Cedex (FR)
(74) Mandataire: Valeo Powertrain Systems
(86) Numéro de dépôt international: PCT/EP2023/055209
(87) Numéro de publication internationale: WO 2023/180030

(56) Documents cités:
- WO-A1-2021/018961
- DE-A1- 102012 012 663
- US-A1- 2016 049 705
- US-B2- 10 910 683

## Description

La présente invention concerne le domaine des dispositifs de régulation thermique et plus particulièrement les moyens mis en œuvre pour réguler la température d'organes de stockage d'énergie électrique équipant des véhicules. En particulier, la présente invention se rapporte à un dispositif de régulation thermique tel que défini par le préambule de la revendication 1, et tel que divulgué par le document WO2021/018961A.

Il est connu de nos jours d'équiper des véhicules électriques, thermiques ou hybrides, d'organes de stockage d'énergie électrique permettant notamment une alimentation électrique d'un moteur électrique du véhicule. Ces organes de stockage d'énergie électrique sont généralement composés de cellules de stockage d'énergie électrique positionnées dans un pack-batterie.

Les constructeurs automobiles cherchent aujourd'hui à fournir des véhicules électriques ou hybrides plus puissants, et dont l'autonomie électrique est augmentée. Pour cela, de plus en plus de packs-batterie, et/ou des packs-batterie de plus en plus grands, sont installés sur ces véhicules électriques ou hybrides. Il est connu d'installer l'ensemble ou au moins une partie de ces packs-batterie au niveau du plancher du véhicule, sensiblement sur toute la largeur du véhicule.

On comprend que lors du fonctionnement du véhicule, les packs-batterie peuvent dégager une quantité de chaleur importante et dès lors être soumis à des hausses de température pouvant provoquer dans certains cas leur endommagement, voire leur destruction. Par conséquent, leur refroidissement est essentiel afin de les maintenir en bon état et d'assurer ainsi la fiabilité, l'autonomie et la performance du véhicule. Par ailleurs, le fonctionnement des packs-batterie peut être moins efficace en cas de basses températures, les composants électriques ou électroniques équipant ces packs-batterie ayant alors besoin d'un temps de montée en température avant de fonctionner à plein rendement.

Pour ce faire, un ou plusieurs dispositifs de régulation thermique destinés à réguler la température des packs-batterie sont mis en œuvre pour assurer les fonctions de chauffage et/ou de refroidissement des composants électriques ou électroniques à l'intérieur de ces packs-batteries et ainsi optimiser le fonctionnement des différents composants.

Ces dispositifs de régulation thermique sont généralement parcourus par un fluide réfrigérant qui peut selon les besoins soit absorber la chaleur émise par chaque pack-batterie afin de le refroidir, soit apporter de la chaleur si la température du pack-batterie est insuffisante pour son bon fonctionnement.

Les dispositifs de régulation thermique peuvent être constitués, par exemple, d'une plaque plane sur laquelle est sertie ou rivetée une plaque emboutie de manière à former, entre la plaque plane et les reliefs formés dans la plaque emboutie, des conduits destinés à être parcourus par le fluide réfrigérant. Ce type de dispositif de régulation thermique s'étend généralement sur l'ensemble de la surface formée par le pack-batterie correspondant, et chacune des cellules de stockage est au contact d'au moins une des plaques, de sorte que le fluide réfrigérant circulant dans le conduit du dispositif de régulation thermique soit apte à échanger des calories avec l'ensemble des cellules de stockage d'énergie électrique.

Les plaques entre lesquelles circule le fluide d'échange thermique sont généralement réalisées dans des matériaux métalliques, par exemple des tôles minces en aluminium, notamment pour permettre le transfert thermique entre les cellules de stockage à refroidir et le fluide réfrigérant destiné à capter les calories. Le problème technique auquel la présente invention se propose d'apporter une solution est notamment celui de l'empreinte carbone d'un dispositif de régulation thermique mettant en œuvre des grandes quantités d'aluminium, notamment dans le contexte de l'augmentation de l'autonomie électrique des véhicule et donc du besoin de plaques de grandes dimensions pour former le dispositif de régulation thermique. L'invention a ainsi pour but de réduire, notamment, les émissions de dioxyde de carbone générées par la structure et le procédé d'assemblage des échangeurs thermique.

La présente invention se propose de pallier les inconvénients de l'art antérieur au moyen d'un dispositif de régulation thermique conforme à la revendication 1.

Dans un contexte où au moins une des plaques peut être formée dans un matériau non métallique pour limiter l'empreinte carbone du dispositif de régulation thermique, il est alors avantageux de prévoir la fixation des plaques l'une sur l'autre par des nervures disposées perpendiculairement entre les deux plaques, afin de concentrer l'opération de fixation sur l'extrémité des nervures, que celle-ci soit par collage ou par déformation thermique de l'extrémité des nervures pour les fusionner avec la plaque correspondante. La présence de deux nervures en parallèle pour former une paroi latérale de délimitation d'un conduit s'inscrit dans une gestion du risque de fuite, puisque le fait d'avoir des nervures en double permet de générer une zone tampon au sein de laquelle peut stagner quelques gouttes de fluide réfrigérant sans que celui-ci ne s'étende de manière incontrôlé, et par exemple à l'extérieur des plaques et par suite en direction des organes de stockage électrique.

Il convient de noter que le dispositif de régulation thermique présente notamment un intérêt pour le refroidissement des organes de stockage d'énergie électrique et c'est dans le cadre de cette application que l'invention va être plus particulièrement décrite par la suite. Toutefois, il pourrait être nécessaire de réguler thermiquement l'organe de stockage d'énergie électrique en augmentant sa température, par exemple lors de phases de démarrage du véhicule par temps froid, et la structure du dispositif de régulation thermique qui va être décrite présenterait dans ce contexte les mêmes avantages que ceux qui découlent de la description qui va suivre.

Selon une caractéristique optionnelle de l'invention, les deux nervures d'un ensemble de deux nervures parallèles s'étendent chacune selon la direction principale du conduit de circulation que ledit ensemble participe à délimiter. En d'autres termes, les deux nervures d'un ensemble délimitant latéralement un conduit de circulation suivent la forme que l'on souhaite donner au conduit de circulation entre les plaques. Tout au long du conduit de circulation, on a une zone tampon de largeur constante, la largeur étant définie par la distance entre les deux nervures parallèle aux plans des plaques de support et de distribution.

On distingue parmi ces deux nervures parallèles une nervure de guidage qui participe à délimiter directement le conduit et une nervure de renfort, qui s'étend parallèlement et qui a pour fonction de créer un barrage supplémentaire à la circulation potentielle de fluide en dehors du conduit de circulation.

Selon une autre caractéristique optionnelle de l'invention, la plaque de support présente une face externe destinée à être au contact de l'organe de stockage d'énergie et une face interne en regard de la plaque de distribution. En d'autres termes, les conduits de circulation formés entre les plaques du dispositif de régulation thermique sont tous délimités à une extrémité par la face interne de la plaque de support, qui s'étend à distance de la plaque de distribution du fait de l'interposition des nervures.

Selon une autre caractéristique optionnelle de l'invention, la plaque de distribution présente une face interne destinée à être en regard de la plaque de support, les ensembles de nervures participant à délimiter les conduits de circulation étant agencées sensiblement perpendiculairement à la face interne de la plaque de distribution et à la face interne de la plaque de support.

Selon une autre caractéristique optionnelle de l'invention, le rapport entre la largeur d'un conduit de circulation et la hauteur des nervures est compris entre 1 pour 5 et 1 pour 7. De préférence avec une hauteur minimum de 2mm, la largeur étant dans ce cas-là de préférence de 10mm. La largeur du conduit est la distance entre deux nervures de guidage participant à délimiter directement ce conduit. La hauteur des nervures est mesurée une fois la plaque de support rendue solidaire de l'extrémité des nervures, de sorte que la hauteur des nervures correspond à la distance entre les deux plaques.

Selon une autre caractéristique optionnelle de l'invention, la plaque de support et la plaque de distribution sont réalisées dans un matériau différent.

Selon une autre caractéristique optionnelle de l'invention, la plaque de support est réalisée en un matériau métallique et la plaque de distribution est réalisée en un matériau plastique. L'utilisation de matière plastique permet d'alléger le dispositif de régulation thermique et de diminuer son empreinte carbone, seule la plaque de support étant conservée en matériau métallique, et notamment en aluminium, pour assurer des performances de transfert thermique entre le fluide réfrigérant et l'organe de stockage d'énergie électrique dont la température doit être régulée.

Selon une autre caractéristique optionnelle de l'invention, les nervures sont surmoulées sur la plaque de distribution. Les nervures peuvent notamment être réalisées dans le même matériau que celui utilisé pour la plaque de distribution, ou à tout le moins dans un matériau plastique, thermoplastique ou composite qui soit compatible avec le matériau utilisé pour réaliser la plaque de distribution pour une opération de surmoulage.

Selon une autre caractéristique optionnelle de l'invention, les nervures sont formées chacune par une déformation locale de la plaque de distribution.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :

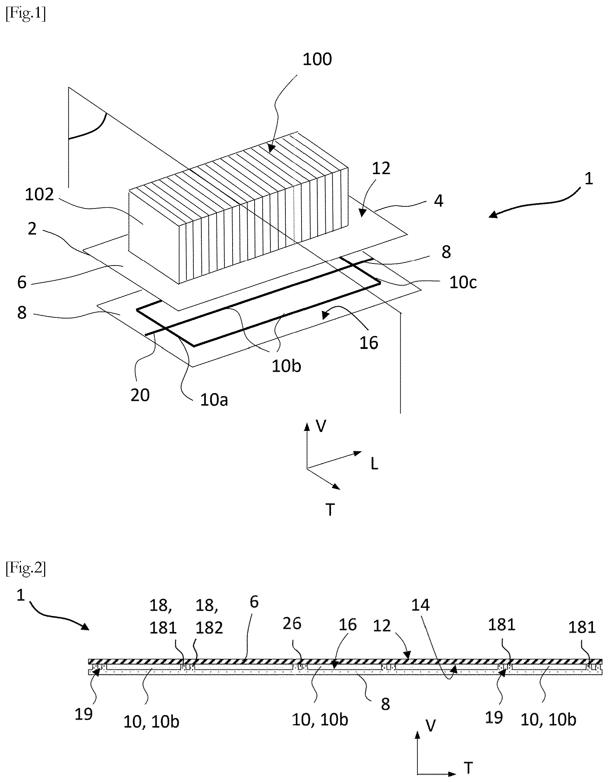

[Fig.1] représente schématiquement un organe de stockage d'énergie électrique et un dispositif de régulation thermique associé, ici en vue éclatée avec une plaque de distribution et une plaque de support à distance l'une de l'autre pour rendre visibles des portions de conduits de circulation de fluide réfrigérant ;
[Fig.2] représente le dispositif de régulation thermique de la figure 1, vu en coupe et dans une position assemblée avec la plaque de support rapportée contre des ensembles de nervures solidaires de la plaque de distribution, le dispositif de régulation thermique comportant ici six ensembles de deux nervures qui participent à délimiter trois conduits de circulation de fluide réfrigérant ;

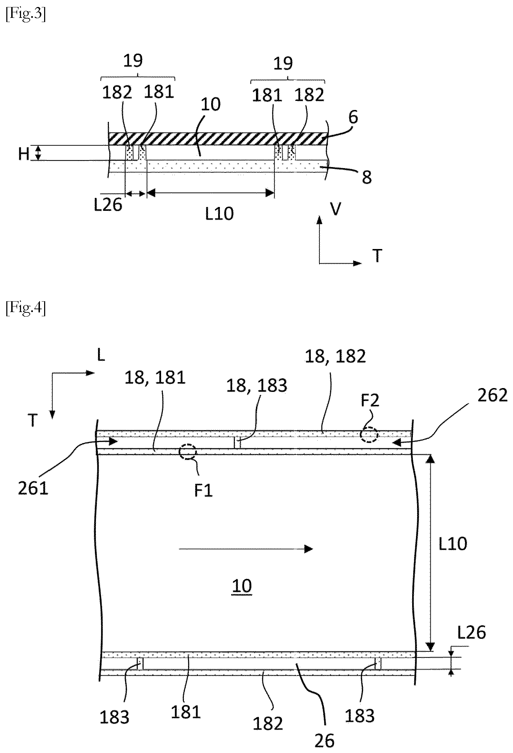

[Fig.3] représente un détail du dispositif de régulation thermique, en vue de dessus, sans la plaque de support pour rendre apparentes l'agencement de deux ensembles de deux nervures délimitant un conduit de circulation de fluide réfrigérant et de nervures de compartimentation agencées en travers d'une zone tampon formée entre deux nervures d'un même ensemble de nervures ;
[Fig.4] représente une vue de détails de la figure 2, rendant plus particulièrement visibles deux ensembles de deux nervures délimitant un conduit de circulation de fluide réfrigérant et permettant d'illustrer, schématiquement, un rapport entre la hauteur des nervures et la largeur du conduit de circulation de fluide réfrigérant.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique.

Sur les figures, les éléments communs à plusieurs figures conservent la même référence.

Dans la description qui va suivre, on se réfèrera à une orientation fonction des axes Longitudinaux, Verticaux et Transversaux tels qu'ils sont définis arbitrairement par le trièdre L,V,T représenté sur les figures. Le choix des appellations de ces axes n'est pas limitatif de l'orientation que peut prendre le dispositif dans son application à un véhicule automobile.

La figure 1 illustre ainsi, schématiquement, un dispositif de régulation thermique 1 selon l'invention, destiné à réguler la température d'un ou plusieurs organes de stockage d'énergie électrique 100 d'un véhicule à motorisation électrique ou hybride. Dans l'exemple illustré, une pluralité de cellules 102 de section rectangulaire sont juxtaposées pour former l'organe de stockage de gestion électrique, mais il convient de noter que cette forme n'est pas limitative de l'invention et que des cellules prenant la forme de cylindres pourraient tout aussi bien être régulées thermiquement par le dispositif qui va désormais être décrit plus en détails.

Le dispositif de régulation thermique 1 s'étend principalement selon une direction longitudinale et il est délimité selon cette direction par une première extrémité longitudinale 2 et une deuxième extrémité longitudinale 4. Le dispositif de régulation thermique 1 comprend au moins une plaque de support 6 et une plaque de distribution 8 entre lesquelles sont délimités des conduits de circulation 10, répartis sensiblement sur toute la surface de la plaque de distribution pour optimiser et rendre homogène le refroidissement de l'organe de stockage d'énergie électrique.

Les conduits de circulation 10 sont destinés à être traversés par un fluide réfrigérant, par exemple de l'eau glycolée, sans que ce choix soit limitatif de l'invention. Le fluide réfrigérant a pour effet de récupérer les calories dégagées par es organes de stockage d'énergie électrique, par transfert de chaleur via la plaque de support, métallique et notamment réalisée en aluminium. On comprend ainsi que le fluide réfrigérant peut désigner n'importe quel type de solution de refroidissement tel que de l'eau, eau glycolée, huile, ou tout autre fluide liquide ou gazeux réfrigérant utilisés dans les domaines concernés.

Selon l'invention, les plaques de support 6 et de distribution 8 sont des pièces sensiblement planes, qui s'étendent principalement dans un plan longitudinal-transversal.

Le dispositif de régulation thermique 1 est disposé par rapport à l'organe de stockage d'énergie électrique 100 de telle sorte que la plaque de support 6 est en regard de cet organe de stockage d'énergie électrique.

Plus particulièrement, la plaque de support 6 présente en opposition une face externe 12, destinée à être au contact de l'organe de stockage d'énergie électrique 100, et une face interne 14, agencée en regard de la plaque de distribution 8 et qui participe à définir avec cette dernière, et plus particulièrement une face interne 16 de cette plaque de distribution 8, les conduits de circulation 10 de fluide réfrigérant.

Tel que cela va être plus particulièrement décrit ci-après, des nervures 18 sont agencées sensiblement perpendiculairement à la face interne 16 de la plaque de distribution 8 et à la face interne 14 de la plaque de support 6 pour délimiter un des conduits de circulation 10.

La plaque de support 6 est donc réalisée en un matériau métallique pour permettre une évacuation des calories dégagées par le fonctionnement de l'organe de stockage d'énergie électrique 100 en direction du fluide réfrigérant pour son évacuation ultérieure hors du dispositif de régulation thermique 1. Et la plaque de distribution 8 est réalisée dans un matériau différent de celui utilisé pour réaliser la plaque de support 6, à savoir un matériau non métallique permettant de limiter l'empreinte carbone du dispositif de régulation thermique 1 selon l'invention. Plus particulièrement, la plaque de distribution 8 est réalisée en matériau plastique et/ou en matériau composite.

Dans l'exemple illustré, les conduits de circulation 10 du fluide réfrigérant s'étendent entre la plaque de distribution 8 et la plaque de support 6 depuis le voisinage de la première extrémité longitudinale 2 du dispositif de régulation thermique 1 jusqu'au voisinage de la deuxième extrémité longitudinale 4 du dispositif de régulation thermique 1, et ils comportent plus particulièrement un conduit de distribution 10a en communication avec une bouche d'entrée de fluide 20, trois conduits principaux 10b respectivement alimentés par le conduit de distribution 10a et débouchant respectivement sur un conduit de collecte 10c en communication avec une bouche de sortie de fluide 22. Ici, le dispositif de régulation thermique 1 comporte trois conduits principaux 10b en parallèles mais il convient de noter qu'un nombre différent de conduits de circulation 10, 10a, 10b, 10c ou un agencement différent de ces conduits de circulation 10 pourraient être mis en œuvre sans sortir du contexte de l'invention.

Tel qu'évoqué, les plaques de support 6 et de distribution 8 sont rendues solidaires l'une de l'autre pour délimiter entre elles des conduits de circulation 10 de fluide réfrigérant, et selon l'invention, ces plaques 6, 8 réalisées en des matériaux différents sont rendues solidaires par l'intermédiaire des nervures 18.

Les nervures 18 sont formées d'un seul tenant avec l'une des plaques 8 et leur extrémité libre 24, à l'opposé de cette plaque dont ils font saillie, est rendue solidaire de l'autre plaque 6 par une opération de fixation appropriée. Plus particulièrement, les nervures 18 sont réalisées de manière à former un ensemble monobloc avec la plaque de distribution 8, puis sont rendues solidaires de la face interne 14 de la plaque de support 6. L'opération de fixation permettant de rendre solidaires les nervures 18 à la plaque de support 6 peut être une opération de collage, la colle étant déposée au préalable sur les extrémités libres 24 de chacune des nervures 18 avant de rapporter la plaque de support 6 sur l'ensemble formé par la plaque de distribution 8 et ses nervures 18 encollées. De manière alternative, l'opération de fixation peut consister en une dépose d'un revêtement primaire d'accroche sur la face d'extrémité libre des nervures 18 puis un chauffage localisée de la zone de contact entre la plaque de support 6 et ces nervures 18 pour faire adhérer la plaque de support 6 métallique et le revêtement polymérisé par le chauffage, l'ensemble étant ensuite pressé et relâché à froid.

Quelle que soit l'opération de fixation mise en œuvre, les nervures 18 peuvent être surmoulées dans un premier temps sur la plaque de distribution 8, de manière à former des saillies de la face interne 16 de cette plaque de distribution 8 en matière plastique.

Les nervures peuvent également, de manière alternative, être formées chacune par une déformation locale de la plaque de distribution 8.

Tel que cela est notamment visible sur les figures 2 à 4, au moins un des conduits de circulation 10 est délimité transversalement, sur au moins un côté, par un ensemble 19 de deux nervures 18 parallèles. Avantageusement, tous les conduits de circulation 10 de fluide sont délimités latéralement, de chaque côté, par un ensemble 19 de deux nervures 18 parallèles, que ce soient les conduits de distribution 10a, de collecte 10c ou bien les conduits principaux 10b et leurs jonctions.

Ainsi, les ensembles 19 de deux nervures 18 permettent de délimiter, au moins en partie, des conduits de circulation 10 de fluide réfrigérant. Tel que particulièrement visible sur la figure 2, les ensembles 19 de deux nervures 18 forment des parois latérales des conduits de circulation alors que d'une part la face interne 14 de la paroi de support 6 forme les parois supérieures de chaque conduit de circulation 10 et que la face interne 16 de la paroi de distribution 8 forme les parois inférieures de chaque conduit de circulation 10. On comprend qu'en au moins une zone spécifique du dispositif de régulation thermique, une nervure ici non représentée est ouverte pour permettre la communication du conduit de circulation correspondant avec la bouche d'entrée et/ou la bouche de sortie pour permettre l'alimentation et/ou l'évacuation du fluide réfrigérant.

Chaque ensemble 19 de deux nervures parallèles est formé d'une nervure de guidage 181, qui est la nervure 18 la plus à l'intérieur par rapport au conduit de circulation 10 que l'ensemble de nervures participe à délimiter, et qui participe ainsi à délimiter directement le conduit de circulation 10, et d'une nervure de renfort 182, qui est la nervure 18 la plus à l'extérieur par rapport au conduit de circulation 10 que l'ensemble de nervures participe à délimiter, et qui s'étend parallèlement à la nervure de guidage 181, en créant de la sorte une zone tampon 26 de largeur constante. La largeur L26 de la zone tampon 26 est mesurée, comme cela est illustré sur les figures 3 et 4, entre les deux nervures d'un même ensemble 19, sensiblement parallèlement au plan d'allongement des plaques de support et de distribution entre lesquelles s'étendent les nervures.

La présence de la nervure de renfort 182 permet de bloquer d'éventuelles gouttes de fluide réfrigérant qui auraient pu suinter entre la plaque de support 6 et la nervure de guidage 181, en formant ainsi un étage supplémentaire d'étanchéité prévenant la circulation potentielle de fluide entre les plaques 6, 8 d'un conduit de circulation 10 à l'autre.

Le dispositif de régulation thermique selon l'invention peut comporter par ailleurs au moins une nervure de compartimentation 183, qui est disposée, conformément aux nervures de guidage 181 et de renfort 182, perpendiculairement aux plaques de support 6 et de distribution 8, et qui est agencée en travers de la zone tampon 26 formée entre les deux nervures 18 d'un même ensemble 19, perpendiculairement à celles-ci. De la sorte, pour une zone tampon 26 formée entre deux nervures d'un même ensemble 19 de nervures le long d'un conduit de circulation 10 de fluide réfrigérant, on compartimente la zone tampon 26 en deux sections voisines et on augmente les performances d'étanchéité : si une première zone de fuite est créée par un mauvais assemblage ou de l'usure entre la nervure de guidage 181 et la plaque de support 6 dans une première section 261 de la zone tampon, telle que représentée schématiquement par le point F1, le fluide réfrigérant qui pourrait s'infiltrer dans la zone tampon 26 par cette zone de fuite ne peut s'échapper par une deuxième zone de fuite qui serait présente entre la zone tampon 26 et la nervure de renfort dans une deuxième section 262 de la zone tampon, de l'autre côté de la nervure de compartimentation 183, telle que représentée schématiquement par le point F2.

Par ailleurs, la présence de ces nervures de compartimentation 183 augmente la surface de fixation, par collage ou par déformation à chaud d'un revêtement d'apport, entre les nervures 18 et la plaque de support 6 de sorte qu'on assure d'autant plus le plaquage de la plaque de support 6 contre les nervures 18 et que l'on limite le risque de soulèvement de la plaque de support 6 sous la pression du fluide réfrigérant circulant dans les conduits de circulation 10, ce qui permet là encore d'améliorer l'étanchéité.

Tel qu'illustré sur la figure 4, les nervures de compartimentation 183 peuvent être disposés en quinconce si l'on considère leur disposition de part et d'autre d'un conduit de circulation 10 de fluide réfrigérant.

Toutes les nervures 18, que ce soient les nervures de guidage 181, de renfort 182 ou de compartimentation 183, présentent sensiblement la même hauteur H, c'est-à-dire une dimension mesurée selon une direction verticale perpendiculaire aux plaques de support 6 et de distribution 8, pour que la plaque de support 6 qui prend appui sur l'extrémité libre 24 de chaque nervure 18 puisse être agencée parallèlement à la plaque de distribution 8 depuis laquelle font saillie chacune des nervures 18.

Dans l'exemple illustré, les nervures 18 présentent une hauteur H de l'ordre de 2 à 5 mm, en étant disposées à distance l'une de l'autre pour former une zone tampon de largeur L26 d'environ 1 mm, la zone tampon étant moins large que haute.

Selon l'invention, les nervures 18 sont dimensionnées de manière à respecter un rapport entre la largeur L10 du conduit de circulation 10 délimité entre deux ensembles 19 de deux nervures 18, mesurée transversalement entre deux nervures de guidage 181, et la hauteur H des nervures 18 de ces ensembles 19, mesurée verticalement entre les deux plaques de support 6 et de distribution 8. Plus particulièrement, ce rapport peut être de l'ordre de 1 pour 10, avec la largeur L10 du conduit de circulation qui est sensiblement dix fois supérieure à la hauteur H des nervures 18. Dans l'exemple précédemment cité de nervures 18 dont la hauteur est de l'ordre de 2 à 5mm, la largeur L10 du conduit de circulation 10 peut être d'environ 20 mm.

L'invention, telle qu'elle vient d'être décrite, atteint bien les buts qu'elle s'était fixés, et notamment de proposer un dispositif de régulation thermique qui soit à la fois performant thermiquement et avec un impact carbone limité, en proposant des plaques entre lesquelles circule un fluide réfrigérant et contre l'une desquelles sont disposés des organes de stockage d'énergie électrique et avec une double rangée de nervures bordant latéralement chaque conduit de circulation de ce fluide réfrigérant. Des variantes non décrites ici pourraient être mises en œuvre sans sortir du contexte de l'invention, dès lors que, conformément à l'invention, elles comprennent les caractéristiques définies dans la revendication 1.

## Revendications

1. Dispositif de régulation thermique (1) d'un organe de stockage d'énergie électrique (100), comprenant au moins une plaque de support (6) et une plaque de distribution (8) rendues solidaires l'une de l'autre pour délimiter entre elles des conduits de circulation (10) d'un fluide réfrigérant, la plaque de support (6) et la plaque de distribution (8) étant deux plaques sensiblement planes rendues solidaires l'une de l'autre par l'intermédiaires de nervures (18) s'étendant perpendiculairement à chacune des plaques (6, 8), et participant à délimiter les conduits de circulation (10), au moins un des conduits de circulation (10) étant délimité transversalement, sur au moins un côté, par un ensemble (19) de deux nervures (18) parallèles, le dispositif de régulation thermique étant **caractérisé en ce qu'**une nervure de compartimentation (183) est agencée en travers de deux nervures (18) d'au moins un ensemble (19) de deux nervures délimitant un côté d'un conduit de circulation (10).

2. Dispositif de régulation thermique (1) selon la revendication 1, **caractérisé en ce que** les deux nervures (18) d'un ensemble (19) de deux nervures parallèles s'étendent chacune selon la direction principale d'un côté du conduit de circulation (10) que ledit ensemble (19) participe à délimiter.

3. Dispositif de régulation thermique (1) selon l'une des revendications précédentes, **caractérisé en ce que** la plaque de support (6) présente une face externe (12) destinée à être au contact de l'organe de stockage d'énergie électrique (100) et une face interne (14) en regard de la plaque de distribution (8).

4. Dispositif de régulation thermique (1) selon l'une des revendications précédentes, **caractérisé en ce que** la plaque de distribution (8) présente une face interne (16) destinée à être en regard de la plaque de support (6), les ensembles (19) de nervures (18) participant à délimiter les conduits de circulation (10) étant agencées sensiblement perpendiculairement à la face interne (16) de la plaque de distribution (8) et à la face interne (14) de la plaque de support (6).

5. Dispositif de régulation thermique selon l'une des revendications précédentes, **caractérisé en ce que** le rapport entre la largeur (L10) d'un conduit de circulation et la hauteur (H) des nervures (18) est compris entre 1 sur 5 et 1 sur 7.

6. Dispositif de régulation thermique selon l'une des revendications précédentes, **caractérisé en ce que** la plaque de support et la plaque de distribution sont réalisées dans un matériau différent.

7. Dispositif de régulation thermique selon la revendication précédente, **caractérisé en ce que** la plaque de support (6) est réalisée en un matériau métallique et la plaque de distribution (8) est réalisée en un matériau plastique.

8. Dispositif de régulation thermique selon l'une des revendications précédentes, **caractérisé en ce que** les nervures (18) sont surmoulées sur la plaque de distribution (8).

9. Dispositif de régulation thermique selon l'une des revendications 1 à 7, **caractérisé en ce que** les nervures (18) sont formées chacune par une déformation locale de la plaque de distribution (8).

## Patentansprüche

1. Thermoregulierungsvorrichtung (1) für eine elektrische Energiespeichervorrichtung (100), mit mindestens einer Trägerplatte (6) und einer Verteilerplatte (8), die miteinander fest verbunden sind, um zwischen sich Zirkulationskanäle (10) für ein Kältemittel zu begrenzen, wobei die Trägerplatte (6) und die Verteilerplatte (8) zwei im Wesentlichen flache Platten sind, die durch Rippen (18) miteinander verbunden sind, die sich senkrecht zu jeder der Platten (6, 8) erstrecken und zur Begrenzung der Zirkulationskanäle beitragen (10) begrenzen, wobei mindestens einer der Zirkulationskanäle (10) an mindestens einer Seite quer durch eine Anordnung (19) aus zwei parallelen Rippen (18) begrenzt ist, **und dadurch, dass** eine Trennrippe (183) quer über zwei Rippen (18) mindestens einer Anordnung (19) aus zwei Rippen angeordnet ist, die eine Seite eines Zirkulationskanals (10) begrenzt.

2. Die Wärmeregulierungsvorrichtung (1) gemäß Anspruch 1, **dadurch gekennzeichnet, dass** die beiden Rippen (18) einer Anordnung (19) aus zwei parallelen Rippen jeweils entlang der Hauptrichtung einer Seite des Strömungskanals (10) verlaufen, den die Anordnung (19) mitbegrenzt.

3. Die Wärmeregulierungsvorrichtung (1) nach einem der vorstehenden Ansprüche, **dadurch gekennzeichnet, dass** die Trägerplatte (6) eine Außenfläche (12), die dazu bestimmt ist, mit der elektrischen Energiespeichervorrichtung (100) in Kontakt zu stehen, und eine Innenfläche (14) aufweist, die der Verteilerplatte (8) zugewandt ist.

4. Die Wärmeregulierungsvorrichtung (1) nach einem der vorstehenden Ansprüche, **dadurch gekennzeichnet, dass** die Verteilerplatte (8) eine Innenfläche (16) aufweist, die dazu bestimmt ist, der Trägerplatte (6) zugewandt zu sein, wobei die Anordnungen (19) von Rippen (18), die an der Begrenzung der Zirkulationskanäle (10) beteiligt sind, im Wesentlichen senkrecht zur Innenfläche (16) der Verteilerplatte (8) und zur Innenfläche (14) der Trägerplatte (6) angeordnet sind.

5. Wärmeregelungsvorrichtung nach einem der vorstehenden Ansprüche, **dadurch gekennzeichnet, dass** das Verhältnis zwischen der Breite (L10) eines Zirkulationskanals und der Höhe (H) der Rippen (18) zwischen 1 zu 5 und 1 zu 7 liegt.

6. Wärmeregelungsvorrichtung nach einem der vorstehenden Ansprüche, **dadurch gekennzeichnet, dass** die Trägerplatte und die Verteilerplatte aus unterschiedlichen Materialien bestehen.

7. Die Wärmeregulierungsvorrichtung nach dem vorstehenden Anspruch, **dadurch gekennzeichnet, dass** die Trägerplatte (6) aus einem metallischen Material und die Verteilerplatte (8) aus einem Kunststoffmaterial besteht.

8. Wärmeregulierungsvorrichtung nach einem der vorstehenden Ansprüche, **dadurch gekennzeichnet, dass** die Rippen (18) auf die Verteilerplatte (8) aufgespritzt sind.

9. Wärmeregulierungsvorrichtung nach einem der Ansprüche 1 bis 7, **dadurch gekennzeichnet, dass** die Rippen (18) jeweils durch eine lokale Verformung der Verteilerplatte (8) gebildet sind.

## Claims

1. A thermal regulation device (1) for an electrical energy storage device (100), comprising at least a support plate (6) and a distribution plate (8) made integral with one another to delimit between them circulation conduits (10) for a refrigerant fluid, the support plate (6) and the distribution plate (8) being two substantially flat plates joined together by ribs (18) extending perpendicularly to each of the plates (6, 8) and helping to delimit the circulation conduits (10), at least one of the circulation conduits (10) is delimited transversely, on at least one side, by an assembly (19) of two parallel ribs (18), **and in that** a partitioning rib (183) is arranged across two ribs (18) of at least one assembly (19) of two ribs delimiting one side of a circulation conduit (10).

2. The thermal regulation device (1) according to claim 1, **characterised in that** the two ribs (18) of an assembly (19) of two parallel ribs each extend along the main direction of a side of the circulation conduit (10) that said assembly (19) helps to delimit.

3. The thermal regulation device (1) according to any one of the preceding claims, **characterised in that** the support plate (6) has an external face (12) intended to be in contact with the electrical energy storage device (100) and an internal face (14) facing the distribution plate (8).

4. The thermal regulation device (1) according to any one of the preceding claims, **characterised in that** the distribution plate (8) has an internal face (16) intended to be facing the support plate (6), the assemblies (19) of ribs (18) participating in delimiting the circulation conduits (10) being arranged substantially perpendicularly to the internal face (16) of the distribution plate (8) and to the internal face (14) of the support plate (6).

5. The thermal regulation device according to any one of the preceding claims, **characterised in that** the ratio between the width (L10) of a circulation conduit and the height (H) of the ribs (18) is comprised between 1 to 5 and 1 to 7.

6. The thermal regulation device according to any one of the preceding claims, **characterised in that** the support plate and the distribution plate are made of a different material.

7. The thermal regulation device according to the preceding claim, **characterised in that** the support plate (6) is made of a metallic material and the distribution plate (8) is made of a plastic material.

8. The thermal regulation device according to any one of the preceding claims, **characterised in that** the ribs (18) are overmolded on the distribution plate (8).

9. The thermal regulation device according to any one of claims 1 to 7, **characterised in that** the ribs (18) are each formed by a local deformation of the distribution plate (8).
